Europäisches Patentamt

European Patent Office

Office européen des brevets

(11) Veröffentlichungsnummer : **0 053 650
B1**

(12) **EUROPÄISCHE PATENTSCHRIFT**

(45) Veröffentlichungstag der Patentschrift :
21.11.85

(51) Int. Cl.⁴ : **H 04 N 3/16**

(21) Anmeldenummer : **81104620.0**

(22) Anmeldetag : **16.06.81**

(54) **Monolithisch integrierte Vertikal-Ablenkschaltung von Fernsehgeräten mit zeilenweise digitaler, tangenskorrigierter Signalaufbereitung.**

(30) Priorität : **08.12.80 EP 80107715**

(43) Veröffentlichungstag der Anmeldung :
**16.06.82 Patentblatt 82/24**

(45) Bekanntmachung des Hinweises auf die Patenterteilung : **21.11.85 Patentblatt 85/47**

(84) Benannte Vertragsstaaten :
**DE FR GB IT NL**

(56) Entgegenhaltungen :
**EP-A- 0 003 576**

(73) Patentinhaber : **Deutsche ITT Industries GmbH
Hans-Bunte-Strasse 19 Postfach 840
D-7800 Freiburg (DE)
DE
ITT INDUSTRIES INC.
320 Park Avenue
New York, NY 10022 (US)
FR GB IT NL**

(72) Erfinder : **Achtstätter, Gerhard, Ing. grad
Sonnhalde 6
D-7803 Gundelfingen (DE)**

(74) Vertreter : **Morstadt, Volker, Dipl.-Ing.
c/o Deutsche ITT Industries GmbH Patent/Lizenzabteilung Postfach 840 Hans-Bunte-Strasse 19
D-7800 Freiburg/Brsg. (DE)**

## Beschreibung

Die Erfindung betrifft eine monolithisch integrierte Vertikal-Ablenkschaltung von Fernsehgeräten mit zeilenweise digitaler, tangenskorrigierter Signalaufbereitung des pulsbreitenmodulierten Signals für die direkte Ansteuerung einer Vertikal-Gegentakt-D-Ablenkstufe, wie sie in der DE-OS 28 05 691 in Fig. 4 gezeigt und auf den Seiten 14 ff beschrieben ist, oder für die über ein Integrierglied erfolgende Ansteuerung einer analogen Vertikal-Gegentakt-B-Ablenkstufe. Die bekannte Vertikal-Ablenkschaltung enthält einen Vorwätszähler, der als Adressengenerator für einen ersten programmierbaren Festwertspeicher dient, in dem für jeweils zwei benachbarte Zeilen entsprechende Digitalworte gespeichert sind. Ferner enthält die vorbeschriebene Anordnung einen zweiten programmierbaren Festwertspeicher, in dem ein dem Ablenkstrom am oberen oder unteren Bildrand entsprechendes Digitalwort, also ein dort so genannter Anfangswert, gespeichert ist. Ein erster Taktgenerator, dessen Frequenz in der Größenordnung der Farbhilfsträgerfrequenz, nämlich bei deren doppeltem Wert, liegt, ist mit den Zähleingängen eines ersten und eines zweiten Zählers, dort als Differenzzähler bezeichnet, gekoppelt, an deren jeweiligem Ausgang das pulsbreitenmodulierte Ansteuersignal für die obere bzw. die untere Bildhälfte abgenommen wird.

Von diesen Teilanordnungen der vorbeschriebenen Anordnung geht die Erfindung aus. Zur vollen Funktionsfähigkeit enthält die vorbeschriebene Anordnung jedoch noch eine ganze Anzahl weiterer Teilschaltungen, wie z. B. einen Multiplexer, zwei Addierer, eine sogenannte « Stufe für Mittelwertbildung », die ihrerseits wiederum einen Komparator, einen Addierer, einen Zwischenspeicher und mehrere Verknüpfungsglieder enthält, ferner noch eine Stufe zur Zweierkomplementbildung, einen Impulsformer und eine Datensperre. Die vorbeschriebene Anordnung ist also ziemlich aufwendig.

Dies betrifft insbesondere den ersten programmierbaren Festwertspeicher, der aufgrund des gewählten Systems zumindest so viele Speicherzeilen aufweisen muß, wie der Hälfte der Zeilenzahl eines Halbbildes entspricht, also z. B. beim 625-Zeilennorm-System 156 Zeilen aufweist.

Die Erfindung, wie sie im Patentanspruch gekennzeichnet ist, löst die Aufgabe, eine gegenüber der vorbeschriebenen Anordnung wesentlich einfacher aufgebaute monolithisch integrierte Vertikal-Ablenkschaltung von Fernsehgeräten zu schaffen, bei der insbesondere für den ersten programmierbaren Festwertspeicher nur noch eine wesentlich verringerte Zeilenzahl erforderlich ist und ferner insbesondere auf die Addierer und die Stufe zur Mittelwertbildung nach der vorbeschriebenen Anordnung verzichtet werden kann, d. h., die Gesamtschaltung soll mit einfacheren Digitalstufen realisiert werden.

Die durch die Erfindung erreichten Vorteile sind im wesentlichen darin zu sehen, daß lediglich Zähler, unter welchen allgemeinen Begriff auch der verwendete Frequenzteiler zu rechnen ist, logische Verknüpfungsglieder und der vorgesehene Decoder erforderlich sind und daß die Reduzierung der Zeilenzahl des ersten programmierbaren Festwertspeichers um etwa das Fünffache möglich ist. Somit entsteht bei der monolithischen Integrierung ein wesentlich geringerer Flächenaufwand und somit eine wesentlich geringere Kristallgröße der integrierten Schaltung als bei der vorbeschriebenen Anordnung. Ferner ist es von Vorteil, daß weniger Schaltungstypen erforderlich sind als bei der vorbeschriebenen Anordnung, nämlich lediglich Speicher, Zähler und logische Verknüpfungsglieder, so daß sich aufgrund der für diese einzelnen Schaltungstypen charakteristischen Grundglieder eine günstigere Flächenanordnung und -aufteilung auf dem Halbleiterkörper ergibt. Dieser Vorteil basiert auf dem Wegfall des Multiplexers, der Addierer und der Komparatoren, welche Digitalschaltungstypen einen aufwendigeren Aufbau als Zähler und logische Verknüpfungsglieder aufweisen.

Die Erfindung wird nun anhand der Zeichnung näher erläutert, die ein schematisiertes Blockschaltbild eines Ausführungsbeispiels zeigt.

Der Vorwärtszähler VZ entspricht dem vorbeschriebenen Zeilenzähler, der allerdings in der Fig. 4 der genannten DE-OS nicht gezeigt ist, und hat auch bei der Erfindung dessen Funktion. Seinem Zähleingang Ez sind die Horizontal-Ablenkimpulse HA zugeführt, die er so lange zählt, bis über die an seinem Rückstelleingang Er liegenden Vertikal-Synchronimpulse VS eine Rückstellung in seinen Nullzustand erfolgt. Der Vorwärtszähler VZ dient also dazu, die Zeilen eines Halbbildes sozusagen zu numerieren, um daraus mittels des Decoders DC entsprechende Adressen zur Ansteuerung der Adresseneingänge Ea des ersten programmierbaren Festwertspeichers PROM1 ableiten zu können.

Entsprechend der Erfindung sind in diesem Festwertspeicher lediglich Steigungswerte enthalten, die sich daraus ergeben, daß der S-förmige Verlauf des Ablenkstufenstroms durch Abschnitte konstanter Steigung angenähert ist. Aufgrund der Speicherung nur dieser Steigungswerte ergibt sich der bereits erwähnte Vorteil der beträchtlichen Speicherzeilenreduzierung des ersten programmierbaren Festwertspeichers, denn für den gesamten S-förmigen Verlauf des Ablenkstufenstroms sind mit ausreichender Genauigkeit lediglich etwa 25 bis 30 Steigungswerte zu speichern. Diese Steigungswerte können vom Hersteller des Fernsehgeräts an die konkreten Kenndaten der verwendeten Bildröhre und des zugehörigen Ablenksystems angepaßt werden, und die entsprechenden Steigungswerte können vom Hersteller des Fernsehgeräts in den ersten programmierbaren Festwertspeicher PROM1 bei der Fertigung entsprechend einprogrammiert werden.

Dieses Programmieren als Vorgabe bestimmter Einstellwerte einer Digitalschaltung entspricht somit völlig der bekannten Vorgabe von Einstellwerten analoger Schaltungen mittels Drehkondensatoren, Potentiometern oder Variometern.

Dadurch, daß nach der Erfindung lediglich Steigungswerte zu speichern sind, ist im übrigen für alle diejenigen Zeilen eines Halbbildes nur eine einzige Adresse erforderlich, die im linearen Teil der Ablenkcharakteristik liegen, so daß die « Zeilenzahl » des Decoders DC der des ersten programmierbaren Festwertspeichers PROM1 entspricht und somit sein Flächenbedarf relativ gering ist.

Der Inhalt einer gerade adressierten Speicherzeile wird nun über den Parallelausgang des ersten programmierbaren Festwertspeichers PROM1 und das erste Mehrfach-UND-Glied MU1 zum Vorwahleingang Ev des ersten Vorwahl-Rückwärtszählers RZ1 parallel im Takt der Horizontal-Ablenkimpulse HA übertragen. Da erste Mehrfach-UND-Glied MU1, für das in der Zeichnung lediglich das dortige schematisierte Schaltsymbol eines üblichen UND-Glieds mit einer bandartigen Eingangsleitung gewählt ist, verknüpft jede einzelne Ausgangsleitung mit der die Horizontal-Ablenkimpulse HA führenden Leitung. Das Mehrfach-UND-Glied MU1 besteht also realiter aus so vielen einzelnen UND-Verknüpfungen, wie der Anzahl Einzelleitungen des Parallel-Ausgangs des ersten programmierbaren Festwertspeichers PROM1 entspricht. Die eben gegebene Definition einer « Mehrfach »-Verknüpfung gilt in gleichem Sinne auch für die weiteren Mehrfach-UND-Glieder und Mehrfach-ODER-Glieder.

Der Zähleingang Ez des ersten Vorwahl-Rückwärtszählers RZ1 liegt am Ausgang des ersten UND-Glieds UG1, dessen einer Eingang am Ausgang des zweiten Taktgenerators TG2 liegt und dessen anderer Eingang mit dem Nullzustand-Ausgang A0 des ersten Vorwahl-Rückwärtszählers RZ1 verbunden ist. Unter « Nullzustand-Ausgang » soll dabei eine Beschaltung des ersten Vorwahl-Rückwärtszählers RZ1 verstanden werden, die beim Durchlauf dieses Zählers durch seinen Nullzustand bei der für die Wirkungsweise vorausgesetzten positiven Logik einen Impuls abgibt, dessen Pegel dem positiveren Pegel H zweier Binärsignalpegel H, L zugeordnet ist.

Diese Beschaltung kann beispielsweise ein sämtliche Zählerstände verknüpfendes NOR-Glied sein, das somit nur, wenn alle Zählerstände einen L-Pegel aufweisen, den erwähnten H-Impuls abgibt.

Die Frequenz des zweiten Taktgenerators TG2 ist so zu wählen, daß, wenn der erste Vorwahl-Rückwärtszähler RZ1 auf den größten Steigungswert gesetzt wird, er innerhalb einer Zeilendauer seinen Nullzustand erreicht. Bei den bereits erwähnten 25 bis 30 Speicherzeilen des ersten programmierbaren Festwertspeichers PROM1 und dem 625-Zeilennorm-System liegt die Frequenz des zweiten Taktgenerators TG2 bei etwa 2 bis 4 MHz.

Der Ausgang des ersten UND-Glieds UG1 ist über den Frequenzteiler FT mit dem Zähleingang Ez des ersten Vorwahl-Vorwärtszählers VV1 verbunden, wobei der Rückstelleingang Er des Frequenzteilers FT mit den Vertikal-Synchronimpulsen gespeist ist. Das ist erforderlich, weil sich nach einem Bilddurchlauf der Frequenzteiler FT in einem vom Nullzustand abweichenden Zustand befinden kann ; der Nullzustand ist zu Beginn des nächsten Bildes jedoch über den Rückstelleingang Er herzustellen.

Der erste Vorwahl-Rückwärtszähler VV1 wird mit dem im zweiten programmierbaren Festwertspeicher PROM2 enthaltenen Digitalwort über den Vorwahleingang Ev voreingestellt, und zwar bei jedem Vertikal-Synchronimpuls VS, der seinem Setzeingang Es zugeführt ist. Dieses Digitalwort entspricht dem Ablenkstrom am oberen oder unteren Bildrand und kann vom Hersteller des Fernsehgeräts als digitaler Einstellwert vorgegeben und einprogrammiert werden.

Durch den nach der Erfindung vorgesehenen Frequenzteiler FT ergibt sich eine Reduzierung der Zählkapazität des ersten Vorwahl-Vorwärtszählers VV1 und der Frequenz des ersten Taktgenerators TG1. Durch den Frequenzteiler FT wird ferner erreicht, daß die Mehrfach-UND-Glieder MU2, MU3, die Mehrfach-ODER-Glieder MO1, MO2 und die Zähler RZ2, VV2 für die Verarbeitung von kürzeren Digitalworten ausgelegt werden können. So kann die Zählkapazität des Zählers VV1, die ohne Frequenzteiler z. B. 15 Bit betrüge (bei 8 Bit für den ersten programmierbaren Festwertspeicher PROM1), auf 11 Bit reduziert werden. Damit haben auch die Teilschaltungen MU2, MU3, MO1, MO2, RZ2, VV2 11 Bit Digitalwortlänge. Ohne Frequenzteiler FT müßte bei diesen Werten außerdem die Frequenz des ersten Taktgenerators TG1 16 fach größer sein, was unrealisierbar ist.

Die Zählerstand-Ausgänge des ersten Vorwahl-Vorwärtszählers VV1 sind nun einerseits über das zweite Mehrfach-UND-Glied MU2 mit dem Vorwahl-Paralleleingang Ev des zweiten Vorwahl-Rückwärtszählers RZ2 und über das dritte Mehrfach-UND-Glied MU3 mit dem Vorwahl-Paralleleingang Ev des zweiten Vorwahl-Vorwärtszählers VV2 verbunden. Diese Verbindung betrifft jeweils die ersten Eingänge der Mehrfach-UND-Glieder MU2, MU3, deren jeweils zweiter Eingang mit den Horizontal-Ablenkimpulsen HA gespeist ist, während der dritte Eingang des dritten Mehrfach-UND-Glieds MU3 am Ausgang Am des ersten Vorwahl-Vorwärtszähler VV1 für das höchstwertige Bit liegt und der entsprechende dritte Eingang des zweiten Mehrfach-UND-Glieds MU2 dieses Ausgangssignal über den Inverter IV invertiert zugeführt erhält. Das höchstwertige Bit des ersten Vorwahl-Vorwärtszählers VV1 bestimmt somit, welcher der beiden Zähler RZ2, VV2 gerade zählt, d. h., damit wird die Aufteilung in die beiden Bildhälften bewirkt.

Der jeweilige Zähleingang Ez der beiden Zähler RZ2, VV2 liegt über die jeweils erste Eingangs-Ausgangs-Strecke des zweiten UND-Glieds UG2 bzw. des dritten UND-Glieds UG3 am Ausgang des ersten Taktgenerators TG1. Der jeweilige Parallelausgang der Zähler RZ2, VV2 liegt über das erste Mehrfach-ODER-Glied MO1 bzw. das zweite Mehrfach-ODER-Glied MO2 am jeweiligen Ansteuersignalausgang A' bzw. A", deren jeweiliger Ausgang auch am zweiten Eingang des zweiten bzw. des dritten UND-Glieds UG2, UG3 liegt. Erreichen somit die Zähler RZ2, VV2 ihren jeweiligen Nullzustand, so erscheint am Ausgang des jeweiligen Mehrfach-ODER-Glieds MO1, MO2 ein L-Pegel, der über das zugeordnete UND-Glied UG2, UG3 die Zufuhr weiterer zu zählender Impulse so lange stoppt, bis die Zähler RZ2, VV2 wieder auf einen neuen Wert voreingestellt werden.

Die Anordnung ist somit so aufgebaut, daß beispielsweise bei Erzeugung eines Impulses mit bei steigender Zeilenzahl abnehmender Impulsdauer am Ansteuerausgang A" ein Impuls mit bei weiter steigender Zeilenzahl zunehmender Impulsdauer am Ansteuersignalausgang A' auftritt. Mit diesen beiden Impulsen kann eine Vertikal-Gegentakt-D-Ablenkstufe angesteuert werden, wie sie beispielsweise in der erwähnten Fig. 4 der DE-OS 28 05 691 gezeigt ist, oder über ein Integrierglied eine übliche analoge Vertikal-Gegentakt-B-Ablenkstufe.

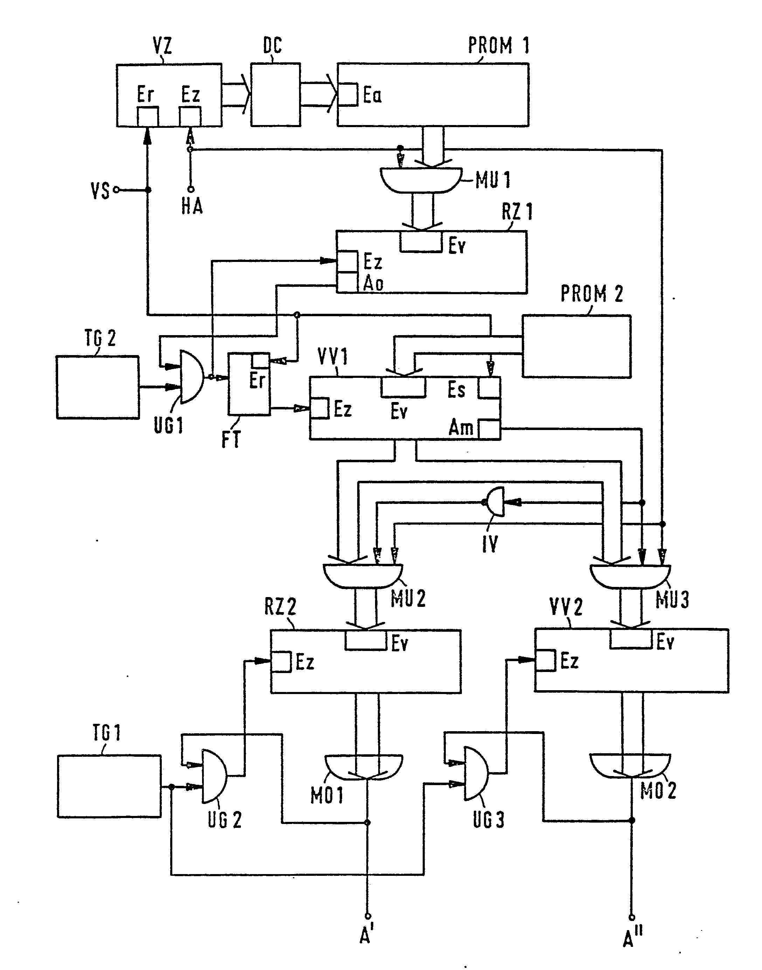

Der zweite Vorwahl-Rückwärtszähler RZ2 und der zweite Vorwahl-Vorwärtszähler VV2 entsprechen den beiden Differenzzählern nach der erwähnten Fig. 4 der vorbeschriebenen Anordnung.

Aufgrund der Tatsache, daß die Erfindung mit ausschließlich digitalen Teilschaltungen aufgebaut ist, läßt sich ihre Schaltung bevorzugt in der sogenannten MOS-Technik realisieren, d. h. also in der Technik integrierter Schaltungen mit Isolierschicht-Feldeffekttransistoren, da diese Technik besser zur Realisierung von Digitalschaltungen geeignet ist, als die bekannte Bipolartechnik.

Wenn keine Vertikal-Gegentakt-D- bzw. -B-Ablenkstufe, sondern eine Eintakt-A-Ablenkstufe vorgesehen werden soll, kann, ohne vom Grundgedanken der Erfindung abzuweichen, auf den zweiten Vorwahl-Vorwärtszähler VV2 und die ihm zugeordneten weiteren Teilschaltungen UG3, MO2, MU3 verzichtet werden.

**Patentanspruch**

Monolithisch integrierte Vertikal-Ablenkschaltung von Fernsehgeräten mit zeilenweise digitaler, tangenskorrigierter Signalaufbereitung des pulsbreitenmodulierten Signals für die direkte Ansteuerung einer Vertikal-Gegentakt-D-Ablenkstufe oder für die über ein Integrierglied erfolgende Ansteuerung einer analogen Vertikal-Gegentakt-B-Ablenkstufe und
mit einem Vorwärtszähler (VZ),
mit einem ersten programmierbaren Festwertspeicher (PROM1),
mit einem zweiten programmierbaren Festwertspeicher (PROM2), in dem ein dem Ablenkstrom am oberen oder unteren Bildrand entsprechendes Digitalwort gespeichert ist,
mit einem ersten Taktgenerator (TG1), dessen Frequenz in der Größenordnung der Farbhilfsträgerfrequenz liegt,
mit einem das Ansteuersignal der oberen (oder unteren) Bildhälfte miterzeugenden ersten Zähler,
mit einem das Ansteuersignal der unteren (oder oberen) Bildhälfte miterzeugenden zweiten Zähler, deren Zähleingänge mit dem Ausgang des ersten Taktgenerators (TG1) gekoppelt sind, gekennzeichnet durch folgende Merkmale :
dem Zähleingang (Ez) des Vorwärtszählers (VZ) sind die Horizontal-Ablenkimpulse (HA) und seinem Rückstelleingang (Er) die Vertikal-Synchronimpulse (VS) zugeführt, und seine Zählerstand-Ausgänge liegen über einen Decoder (DC) an den Adresseneingängen (Ea) des ersten programmierbaren Festwertspeichers (PROM1),
der S-förmige Verlauf des Ablenkstufenstroms ist durch Abschnitte konstanter Steigung angenähert, deren zugehörige Steigungswerte im ersten programmierbaren Festwertspeicher (PROM1) unter jeweils einer Adresse enthalten sind,
der Ausgang eines zweiten Taktgenerators (TG2) ist über die eine Eingangs-Ausgangs-Strecke eines ersten UND-Glieds (UG1) mit dem Zähleingang (Ez) eines ersten Vorwahl-Rückwärtszählers (RZ1) verbunden, dessen Vorwahl-Paralleleingang (Ev) über die einen Eingangs-Ausgangs-Strecken eines ersten Mehrfach-UND-Glieds (MU1) am Parallelausgang des ersten programmierbaren Festwertspeichers (PROM1) und dessen Nullzustand-Ausgang (A0) am anderen Eingang des ersten UND-Glieds (UG1) liegt, während den anderen Eingängen des ersten Mehrfach-UND-Glieds (MU1) die Horizontal-Ablenkimpulse (HA) zugeführt sind,
der Ausgang des ersten UND-Glieds (UG1) liegt über einen Frequenzteiler (FT) am Zähleingang (Ez) eines ersten Vorwahl-Vorwärtszählers (VV1), dessen Setzeingang (Es) die Vertikal-Synchronimpulse (VS) zugeführt sind und dessen Vorwahl-Paralleleingang (Ev) mit dem Parallelausgang des zweiten programmierbaren Festwertspeichers (PROM2) verbunden ist, wobei dem Rückstelleingang (Er) des Frequenzteilers (FT) die Vertikal-Synchronimpulse (VS) zugeführt sind,
der Ausgang des ersten Taktgenerators (TG1) ist über die eine Eingangs-Ausgangs-Strecke eines zweiten UND-Glieds (UG2) mit dem Zähleingang (Ez) eines den ersten Zähler bildenden zweiten Vorwahl-Rückwärtszählers (RZ2) und über die Eingangs-Ausgangs-Strecke eines dritten UND-Glieds (UG3) mit dem Zähleingang (Ez) eines den zweiten Zähler bildenden zweiten Vorwahl-Vorwärtszählers (VV2) verbunden,
die Zählerstandausgänge des ersten Vorwahl-Vorwärtszählers (VV1) liegen über die ersten Eingangs-Ausgangs-Strecken eines zweiten Mehrfach-UND-Glieds (MU2) am Vorwahl-Paralleleingang (Ev) des zweiten Vorwahl-Rückwärtszählers (RZ2),

an den zweiten Eingängen des zweiten Mehrfach-UND-Glieds (MU2) liegen die Horizontal-Ablenkimpulse (HA) und an seinen dritten Eingängen der Ausgang eines Inverters (IV), dessen Eingang am Ausgang (Am) des ersten Vorwahl-Vorwärtszählers (VV1) für das höchstwertige Bit liegt,

die Zählerstand-Ausgänge des ersten Vorwahl-Vorwärtszählers (VV1) liegen über die ersten Eingangs-Ausgangs-Strecken eines dritten Mehrfach-UND-Glieds (MU3) am Vorwahl-Paralleleingang (Ev) des zweiten Vorwahl-Vorwärtszählers (VV2),

an den zweiten Eingängen des dritten Mehrfach-UND-Glieds (MU3) liegen die Horizontal-Ablenkimpulse (HA) und an seinen dritten Eingängen der Ausgang (Am) des ersten Vorwahl-Vorwärtszählers (VV1) für das höchstwertige Bit,

die Zählerstand-Ausgänge des zweiten Vorwahl-Rückwärtszählers (RZ2) liegen über ein erstes Mehrfach-ODER-Glied (MO1) am Ansteuersignal-Ausgang (A') für die eine Bildhälfte, der auch am anderen Eingang des zweiten UND-Glieds (UG2) liegt,

die Zählerstand-Ausgänge des zweiten Vorwahl-Vorwärtszählers (VV2) liegen über ein zweites Mehrfach-ODER-Glied (MO2) am Ansteuersignal-Ausgang (A'') für die andere Bildhälfte, der auch am anderen Eingang des dritten UND-Glieds (UG3) liegt, und

die Frequenz des zweiten Taktgenerators (TG2) ist so gewählt, daß bei Vorwahl des ersten Vorwahl-Rückwärtszählers (RZ1) mit dem höchsten Steigungswert sein Nullzustand innerhalb einer Zeilendauer erreicht ist.

**Claim**

Monolithic integrated vertical-deflection circuit for television sets with tangent-corrected line-frequency-derived digital generation of the pulsewidth-modulated signal for directly driving a class-D push-pull vertical-deflection stage or for driving a class-B push-pull analog vertical-deflection stage via an integrator and

with an up-counter (VZ),

with a first programmable read-only memory (PROM1),

with a second programmable read-only memory (PROM2), which holds a digital word corresponding the deflection current at the top or bottom of the image,

with a first clock generator (TG1) whose frequency is on the order of the color-subcarrier frequency,

with a first counter which participates in the generation of the drive signal for the upper (or lower) half of the image, and

with a second counter which participates in the generation of the drive signal for the lower (or upper) half of the image, the count inputs of said first and second counters being coupled to the output of the first clock generator (TG1), characterized by the following features :

The count input (Ez) and the reset input (Er) of the up-counter (VZ) are fed with the horizontal deflection pulses (HA) and the vertical synchronizing pulses (VS), respectively, and the count outputs of the up-counter (VZ) are connected to the address inputs (Ea) of the first programmable read-only memory (PROM1) via a decoder (DC) ;

the S-shaped characteristic of the deflection-stage current is approximated by portions of constant slope whose associated slope values are stored in the first programmable read-only memory (PROM1) under one address each ;

the output of a second clock generator (TG2) is connected via one of the input-output paths of a first AND gate (UG1) to the count input (Ez) of a first presettable down-counter (RZ1), whose parallel preset input (Ev) is connected to the parallel output of the first programmable read-only memory (PROM1) via first input-output paths of a first multiple AND gate (MU1), and whose zero-state output (A0) is coupled to the other input of the first AND gate (UG1), while the second inputs of the first multiple AND gate (MU1) are fed with the horizontal-deflection pulses (HA) ;

the output of the first AND gate (UG1) is connected via a frequency divider (FT) to the count input (Ez) of a first presettable up-counter (VV1) whose preset enable input (Es) is fed with the vertical synchronizing pulses (VS) and whose parallel preset input (Ev) is connected to the parallel input of the second programmable read-only memory (PROM2), the reset input (Er) of the frequency divider (FT) being fed with the vertical synchronizing pulses (VS) ;

the ouput of the first clock generator (TG1) is connected via one of the input-output paths of a second AND gate (UG2) to the count input of a second presettable down-counter (RZ2) forming the first counter, and via one of the input-output paths of a third AND gate (UG3) to the count input of a second presettable up-counter (VV2) forming the second counter ;

the count outputs of the first presettable up-counter (VV1) are connected to the parallel preset input (Ev) of the second presettable down-counter (RZ2) via first input-output paths of a second multiple AND gate (MU2) ;

the second inputs of the second multiple AND gate (MU2) are fed with the horizontal-deflection pulses (HA), and the third inputs of the second multiple AND gate (MU2) are connected to the output of an inverter (IV) having its input connected to the output (Am) of the first presettable up-counter (VV1) for the most significant bit ;

the count outputs of the first presettable up-counter (VV1) are connected to the parallel preset input (Ev) of the second presettable up-counter (VV2) via first input-output paths of a third multiple AND gate (MU3) ;

the second inputs of the third multiple AND gate (MU3) are fed with the horizontal-deflection pulses (HA), and the third inputs of the third multiple AND gate (MU3) are connected to the output (Am) of the first presettable up-counter (VV1) for the most significant bit ;

the count outputs of the second presettable down-counter (RZ2) are connected via a first multiple OR gate (MO1) to the drive-signal output (A') for one half of the image, which output is also connected to the other input of the second AND gate (UG2) ;

the count outputs of the second presettable up-counter (VV2) are connected via a second multiple OR gate (MO2) to the drive-signal output (A") for the other half of the image, which output is also connected to the other input of the third AND gate (UG3), and

the frequency of the second clock generator (TG2) is chosen so that when the first presettable down-counter (RZ1) is set to the highest slope value, its zero state is reached within one line period.

## Revendication

Circuit intégré monolithique de déviation verticale pour téléviseurs à génération numérique ligne par ligne, avec correction en tangente, du signal d'impulsions modulées en largeur pour l'attaque directe d'un étage de déviation verticale push-pull de classe D ou pour l'attaque par l'intermédiaire d'un composant intégrateur d'un étage de déviation verticale analogique push-pull de classe B et

avec un compteur (VZ),

avec une première mémoire de constantes programmable (PROM1),

avec une seconde mémoire de constantes programmable (PROM2) dans laquelle est stocké un mot numérique correspondant au courant de déviation aux bords supérieur et inférieur de l'image,

avec un premier générateur d'impulsions (TG1) dont la fréquence est de l'ordre de celle de la sous-porteuse couleur,

avec un premier compteur produisant le signal d'attaque de la trame supérieure (ou inférieure),

avec un premier compteur produisant le signal d'attaque de la moitié inférieure (ou supérieure) de l'image dont les entrées de comptage sont couplées à la sortie du premier générateur d'impulsions (TG1),

caractérisé en ce que :

l'entrée de comptage (Ez) du compteur (VZ) reçoit les impulsions de déviation horizontales (HA) et son entrée de remise à zéro (Er) les impulsions de synchronisations verticales (VS), et ses sorties d'état de comptage sont reliées par un décodeur (DC) aux entrées d'adresse (Ea) de la première mémoire de constantes programmable (PROM1),

l'allure en forme de S du courant de l'étage de déviation est approchée par des tronçons de pente constante dont les valeurs de pente correspondantes sont stockées dans la première mémoire de constantes programmable (PROM1) sous des adresses correspondantes,

la sortie d'un second générateur d'impulsions (TG2) est reliée par la voie entrée-sortie d'un premier élément ET (UG1) à l'entrée de comptage (Ez) d'un premier décompteur à préréglage (RZ1) dont l'entrée parallèle de préréglage (Ev) est reliée par les voies entrée-sortie d'un premier élément ET multiple (MU1) à la sortie parallèle de la première mémoire de constantes programmable (PROM1) et dont la sortie d'état zéro (A0) est reliée à l'autre entrée du premier élément ET (UG1), tandis que les autres entrées du premier élément ET multiple (MU1) reçoivent les impulsions de déviation horizontales (HA),

la sortie du premier élément ET (UG1) est reliée par un diviseur de fréquence (FT) à l'entrée de comptage (Ez) d'un premier compteur à préréglage (VV1) dont l'entrée de forçage (Es) reçoit les impulsions de synchronisation verticale (VS) et dont l'entrée parallèle de préréglage (Ev) est reliée à la sortie parallèle de la seconde mémoire de constantes programmable (PROM2), l'entrée de remise à zéro (Er) du diviseur de fréquence (FT) recevant les impulsions de synchronisation verticale (VS),

la sortie du premier générateur d'impulsions (TG1) est reliée par l'une des voies entrée-sortie d'un second élément ET (UG2) à l'entrée de comptage (Ez) d'un second décompteur à préréglage (RZ2) formant le premier compteur et, par la voie entrée-sortie d'un troisième élément ET (UG3), à l'entrée de comptage (Ez) d'un second compteur à préréglage (VV2) formant le second compteur,

les sorties d'état de comptage du premier compteur à préréglage (VV1) sont reliées par l'intermédiaire des premières voies entrée-sortie d'un second élément ET multiple (MU2) à l'entrée parallèle de préréglage (Ev) du second décompteur à préréglage (RZ2),

les secondes entrées du second élément ET multiple (MU2) reçoivent les impulsions de déviation horizontales (HA) et que ses troisièmes entrées sont reliées à la sortie d'un inverseur (IV) dont l'entrée est reliée à la sortie (Am) du premier compteur à préréglage (VV1) pour le bit de poids fort,

les sorties d'état de comptage du premier compteur à préréglage (VV1) sont reliées par l'intermédiaire des premières voies entrée-sortie d'un troisième élément ET multiple (MU3) à l'entrée parallèle de préréglage (Ev) du second compteur à préréglage (VV2),

les secondes entrées du troisième élément ET multiple (MU3) reçoivent les impulsions de déviation horizontales (HA) et que ses troisièmes entrées sont reliées à la sortie d'un inverseur (IV) dont l'entrée est reliée à la sortie (Am) du premier compteur à préréglage (VV1) pour le bit de poids fort,

les sorties d'état de comptage du second décompteur à préréglage (RZ2) sont reliées à la sortie de signal d'attaque (A') pour la première demi-image par l'intermédiaire d'un premier élément OU multiple (MO1) dont la sortie est également reliée à l'autre entrée du second élément ET (UG2),

les sorties d'état de comptage du second compteur à préréglage (VV2) sont reliées à la sortie de signal d'attaque (A") pour l'autre demi-image par l'intermédiaire d'un second élément OU multiple (MO2) dont la sortie est également reliée à l'autre entrée du troisième élément ET (UG3), et

la fréquence du second générateur d'impulsions (TG2) est ainsi choisie que lorsque le premier décompteur à préréglage (RZ1) reçoit la valeur de pente maximale, son état zéro est atteint dans la durée d'une ligne.

0 053 650